# EUROPEAN PATENT SPECIFICATION

(11) **EP 0 313 153 B1**
(45) Date of publication and mention of the grant of the patent: **13.01.1993**
(21) Application number: 88202285.8
(22) Date of filing: 13.10.1988
(51) Int. Cl.: H01M 10/54, C22B 3/00

(54) **Hydrometallurgical process for recovering in pure metal form all the lead contained in the active mass of exhausted batteries**
Hydrometallurgisches Verfahren zum Rückgewinnen des gesamten reinmetallischen Bleies aus der aktiven Masse verbrauchter Batterien
Procédé hydrométallurgique pour récupérer sous forme de métal pur tout le plomb contenu dans la masse active de batteries épuisées

(30) Priority: 20.10.1987 IT 2234887
(43) Date of publication of application: 26.04.1989
(73) Proprietor: B.U.S. ENGITEC SERVIZI AMBIENTALI S.r.l., I-20159 Milano (IT)
(72) Inventor: Olper, Marco, I-20052 Monza Milan (IT); Fracchia, Pierluigi, I-20124 Milan (IT)
(74) Representative: Appoloni, Romano

(56) References cited:
- DE-A- 407 629
- DE-A- 707 087
- DE-A- 3 203 481
- FR-A- 2 590 277
- GB-A- 2 073 725
- US-A- 1 148 062
- US-A- 1 752 356
- US-A- 1 911 604
- US-A- 3 395 010
- US-A- 4 024 055
- US-A- 4 107 007
- US-A- 4 118 219
- US-A- 4 229 271
- US-A- 4 269 810
- US-A- 4 460 442
- U.S. BUREAU OF MINES, REPORT OF INVESTIGATION, 1984, no. 8857; A.Y.LEE et al.: "Electrolytic method for recovery of lead from scrap batteries. Scale-up study using 20-liter multielectrode cell"

## Description

According to the various processes known from the prior art for desulphurizing the paste, by treating the sludge of the exhausted batteries with solutions of alkali-metal or ammonium carbonate, a solution, into which practically all the sulphur passes in the form of soluble sulphate (as either alkali-metal or ammonium sulphate), and a mixture of insoluble lead compounds are obtained, wherein the mixture of insoluble lead compounds, separated from the solution, and thoroughly washed with water, is practically free from sulphur.

Such a mixture can be easily reduced with coal at a relatively low temperature (800-900^{o}C), without any substantial emissions of sulphur dioxide taking place, and without a lead matte being produced.

The pyrometallurgical reduction of this product is the most widely used route at present, also owing to the advantages of the high productivity and of the long life of the reduction furnaces, and of the high lead extraction yields.

However, the pyrometallurgical processing of the lead-containing materials requires the adoption of special precautions in handling and in furnace charging, and emissions, from the same furnaces, of fumes and volatile dusts are possible.

Due to these reasons, the refiner must have available large filtration facilities, and a wide and expensive network for monitoring the polluting lead inside the working premises, and in the environment surrounding the factories.

Due allowance must moreover be made for high costs of disposal of the slag from the metallurgical processing, which in some, more environmentally advanced, areas, represents one of the most important components of the processing cost.

Due to this reasons, very important are processes for recovering lead from the active mass of the exhausted batteries, which may constitute a valuable alternative to the pyrometallurgical processes, such as, mainly, those processes following a totally hydrometallurgical route, such as the processes of electrolytic extraction, i.e., the electrowinning processes.

The desulphurized paste has, on the average, the following composition:

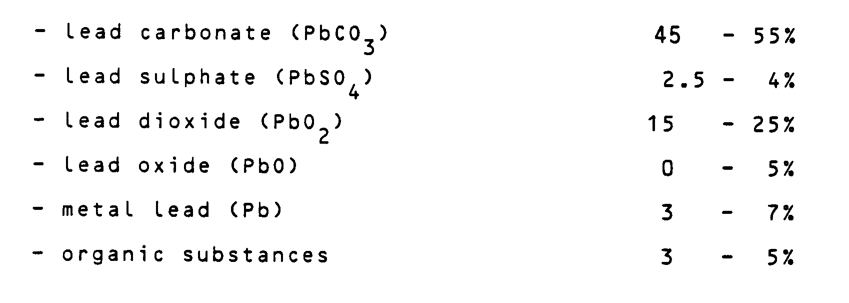

It is well known that the practical problem of the hydrometallurgical processing of the active mass of the exhausted batteries is that of rendering soluble in the solution selected for the electrolysis all the lead compounds which constitute the mixture, in particular PbO₂, fairly high percentages of which are present in it. In fact, the residue from the acidic attack of the mixture not only should not constitute an intolerable loss of lead, but it should possibly contain such a low percentage of lead, as not to constitute a toxic and harmful residue.

On the other hand, owing to the well-known insolubility of PbO₂ in the normal acids suitable for the electrowinning process, without a preliminary treatment of reduction of PbO₂, the residue from the acidic attack of the mixture is very rich in lead, and must be brought again to the pyrometallurgical recovery.

According to the technique known from the prior art, the solubilization of all of the components of the active mass in the various electrolytes has been accomplished by a variety of routes.

In chronological order, the following patents can be cited:
- C.E. Tucker in U.S.P. 1,148,062 discloses a heating of the battery sludge, in order to transform PbO₂ into soluble PbO and Pb₂O.
- W.C. Smith in U.S.P. 1,752,356, in order to solubilize PbO₂ before the attack with caustic alkali, treats the whole active mass by a heating step under a reducing atmosphere (PbO is formed).
- J.H. Calbeck in U.S.P. 1,911,604 provides for the active mass of the battery to be leached by a solution of sodium acetate. Pb oxide and sulphate are dissolved, whilst PbO₂ is normally insoluble in that electrolyte. But, in the presence of metal Pb and in the said electrolyte, a local couple is established, so that PbO₂ and an equivalent amount of metal Pb should be dissolved.
- A.F. Gäumann in U.S.P. 4,107,007 leaches the active mass with a concentrated solution of an alkali-metal hydroxide, to which molasses, or raw sugar, or similar products, have been previously added.
   In such way, Pb oxide and Pb sulphate are dissolved, and are sent to the electrolysis. The behaviour of PbO₂ is not detailed.
- M.E. Elmore in U.S.P. 4,118,219, in order to reduce PbO₂, mentions the use of some reducing agents, such as formaldehyde, H₂O₂, metal Pb, or calcination.
- R.D. Prengaman in U.S.P. 4,229,271 proposes two routes for eliminating PbO₂ from the active mass, and rendering it wholly soluble in the usual acids for the electrowinning process:
   a) a drying at 100°C of the active mass, followed by a roasting under a reducing atmosphere at temperatures comprised within the range of from 290 to 325°C;
   b) a treatment of the aqueous suspension of the active mass with sulphur dioxide, or with alkali-metal or ammonium sulphite or bisulphite.
- U. Ducati in U.S.P. 4,460,442 makes the active mass of the battery react at 100-120°C in the presence of a strongly alkaline solution, in order to obtain a precipitate of minium, which should display the property of getting completely dissolved in the hot concentrated solutions of fluoboric and fluosilicic acid.
- A.Y. Lee and E.R. Cole of Bureau of Mines in R..I. 8857 suggest two ways for reducing PbO₂ contained in the active mass:
   a) by means of the addition of Pb powder during the leaching with fluosilicic acid of the paste already desulphurized by reaction with ammonium carbonate;
   b) by means of the addition of ammonium bisulphite during the treatment of desulphurization with ammonium carbonate.

The suggested methods of high-temperature reduction of PbO₂ under a reducing atmosphere show the disadvantage that they add two steps to the processing cycle: the drying, and the reducing roasting. These processing steps require a strict control of the operating conditions, and they must be furthermore carried out inside a unit (the furnace, or the roaster) provided with an adequate dust removal facility. Furthermore, even if the temperatures are low, the handling of a dry material may cause environmental pollution.

The method resorting to the reduction during the acidic attack, by means of the addition of lead powder, implies the transfer of a portion of the produced lead to produce the powder from it; it is therefore expensive, not only due to the recycle of lead, but also owing to the operating conditions due to the low reaction speed at temperatures close to ambient temperature.

The method of reduction with sulphur dioxide, sulphite or bisulphite before the carbonation involves an expense due to the reactant to be added, generally in excess; makes the consumption of the amount of carbonate required for the desulphurization increase by approximately 25%; the reaction is slow and the yield of PbO₂ reduction is generally not total.

In general, all these systems known from the prior art suffer from the serious problem that they do not secure a total dissolving of the lead contained in the active mass of the batteries.

According to the present invention, the present Applicant could observe that such a technical problem could be also caused by the presence in the desulphurized paste of the organic substances, both those introduced during the step of battery manufacturing, and those constituted by fragments of separators, wood, fibres and paper which, during the step or crushing and processing of the exhausted battery, get concentrated in the active mass. In as much as most of these organic substances have a structure of cellulose type, and are very porous, they retain the lead compounds, preventing this latter from being completely dissolved, and eventually lowering the yield of the recovery process.

The purpose of the present invention is to solve the above reminded problems as regards the processes of treatment by the hydrometallurgical route by means of the electrowinning of the desulphurized active mass of the exhausted batteries, and, in particular, to be able to achieve a nearly total recovery of lead present in it.

In order to achieve such a purpose, the present invention proposes a hydrometallurgical process for recovering, by extraction by electrolytic way (electrowinning), in pure metal form, all the lead from the active mass, or desulphurized paste, of the exhausted batteries, comprising an initial step of leaching of the said active mass with an aqueous solution of an acid selected from the acids suitable for electrowinning, and the subsequent filtration of the insoluble residue of the leaching, containing organic substances Cn(H₂O)m and lead dioxide PbO₂, and a step of feed of the solution obtained as the filtrate from said filtration, to the electrowinning, characterized in that it comprises the further steps of:
a) treating with concentrated sulphuric acid said insoluble residue of the leaching, with the simultaneous occurring of the following reactions:

   1) Cₙ(H₂O)ₘ+ H₂SO₄ nC + H₂SO₄.mH₂O

   2) C + 2PbO₂+ 2H₂SO₄ 2PbSO₄+ CO₂+ 2H₂O

   up to the quantitative reduction of all of the lead dioxide PbO₂ and elimination of the organic substances Cₙ(H₂O)ₘ contained in said active mass, inasmuch as the organic substance present in said insoluble residue are sufficiently reactive with the concentrated sulphuric acid so that the reaction 1) is completed and their amount is adequate to produce the required C for reducing the whole PbO₂ according to the reaction 2);
b) feeding the so-treated insoluble residue to the desulphurization step.

In order to better understand characteristics and advantages thereof, the process of the present invention, as hereinabove substantially defined, is now disclosed in greater detail by referring to the exemplifying block diagram depicted in the hereto attached drawing, which is not to be understood as being limitative of the same invention.

The starting material for the process is the active mass, or desulphurized paste, from which the other components of the exhausted battery have already been separated, and which has already undergone the process of desulphuration according to the prior art.

As to the composition of such active mass, or paste, reference should be made to the above reference cited in the present disclosure.

Such a starting material is leached with the aqueous solution of an acid suitable for the subsequent electrowinning, preferably either fluoboric or fluosilicic acid. In this step, the reactions occur:

PbCO₃ + 2H⁺ ---→ Pb⁺⁺ + CO₂ + H₂O

PbO + 2H⁺ ---→ Pb⁺⁺ + H₂O

The reaction is complete in less than one hour at the temperature of the electrolyte (30-50^{o}C).

After the acidic leaching of the desulphurized paste, as a solid residue only the organic substances (thin pieces of separators and ebonite, fibres, glues, carbon black, wood, paper, and so forth), generally indicated by the formula Cₙ(H₂O)ₘ, and lead dioxide PbO₂, remain undissolved.

The liquid/solid mixture produced by the leaching is separated by press-filtration, with an accurate washing, such as to remove all the electrolyte from the insoluble residue. The insoluble residue from the filtration generally represents 25-30% of the leached material, and contains approximately 20% of lead present in the raw material.

To the insoluble residue coming from the filtration, according to the invention concentrated H₂SO₄ is then added, with the simultaneous occurring of the two above defined (1) and (2) reactions.

The ratio of organic substances Cₙ(H₂O)ₘ/lead dioxide PbO₂ is generally such as to secure the quantitative reduction of all of present lead dioxide, and the elimination of carbonaceous residues. The moisture content of the insoluble residue alter the filtration - viz., the filtration panel - is an important aspect, because it controls the reaction of carbonization of the organic substances with concentrated sulphuric acid.

A moisture level comprised within the range of from 5 to 15% is the optimum for the reaction to take place completely, and with a controlled course. The amount of H₂SO₄ to be added to the filtration panel is practically equal to the stoichiometric amount which is necessary to block all contained Pb as PbSO₄.

The reaction is fast, and takes place in paste phase; within a few minutes, the whole brown-red mass turns gray, which indicates that the reaction is complete. According to the present invention, elemental carbon which is formed in the reaction (1) is thought to be surprisingly capable of activating reaction (2). The so-obtained material is recycled to the desulphurization step, and the cycle begins again.

The electrolyte deprived of lead in the electrolysis step is used to leach the product coming from the desulphurization step.

The filtrate solution contains all Pb in an ion form, and does not normally require any purifications, because it is the same Pb powder present in the desulphurized paste, which carries out the action of displacement (also said "cementation") of the metal impurities (essentially Sb and Cu), small amounts of which may have gone in solution during the acidic attack.

The self-purified solution of Pb⁺⁺ electrolyte can be then directly sent to the electrolytic extraction, or electrowinning, of lead, which takes place inside normal cells suitable for the electrolysis, having insoluble anodes and cathodes consisting of thin lead or stainless-steel sheets.

By operating under suitable conditions, a cathodic deposit endowed with excellent characteristics of quality and purity can be obtained, with the deposition of PbO₂ on the anode being completely avoided.

The cathodes are smelted to form ingots, which are marketed as electrolytic lead. The solution leaving the electrowinning returns to the acidic leaching of the paste.

### Example

980 g of desulphurized, well-washed paste, containing, as referred to the dry matter, 70.5% of Pb, 0.68% of Sb and 0.48% of S, was leached with 5 litres of exhausted electrolyte from electrowinning, containing:
- 49 g/l of Pb⁺⁺
- 139 g/l of free HBF₄.
After a 1-hour stirring at 50^{o}C, by filtration:
- 330 g of an insoluble washed residue having the composition:

| | |
|---|---|
| H₂O | 12 % |
| Pb | 51,6% |
| S | 1.4% |

and
- 4.95 litres of a lead-containing electrolyte, containing

| | |
|---|---|
| 152.5 | g/l of Pb⁺⁺ |
| 1.1 | g/l of Sb⁺⁺⁺ |
| 51 | g/l of free HBF₄ |

were separated.

The leaching with fluoboric acid enabled 75% of total Pb contained in the paste to be extracted.

The amount of 330 g of residue was treated with 82 g of concentrated H₂SO₄, the mixture was stirred for 10 minutes up to an earth consistency, with an end product being obtained, which was gray in colour, and was substantially constituted by lead sulphate.

By recycling this material to the steps of carbonation and leaching with the exhausted electrolyte, a further 146 g of Pb was extracted.

With this sequence of operations, from 980 g of initial paste, 663.5 of lead in fluoboric solution was therefore obtained (extraction yield 96%).

By recycling this material to the carbonation step, and leaching it with 1.5 litres of an exhausted electrolyte having the above shown composition:
- an end residue of 54 g, having the following composition:

| | |
|---|---|
| H₂O | 13.5 % |
| Pb | 43.2 % |
| S | 3.90% |

and
- 1.48 litres of an electrolyte containing:

| | |
|---|---|
| 148 | g/l of Pb |
| 55 | g/l of free HBF₄ |

were obtained.
The overall amount of electrolyte obtained is:
- 6.43 litres, containing:

| | |
|---|---|
| 151.5 | g/l of Pb⁺⁺ |
| 51.9 | g/l of free HBF₄ |

By processing this electrolyte, to which the usual deposit leveling-off agents were previously added, to the electrowinning in an electrolytic cell having insoluble anodes, and cathodes made of a thin sheet of electrolytic lead, 660 g was produced of cathodic lead. No PbO₂ was formed at the anode.

The cell was run 24 hours long at 7.4 A and 2.9 V.

The cathodic current density was of 300 A/m².

The current yield was of 96.2%.

The exhausted electrolyte to be recycled to the chemical attack of fresh paste contained:

| | |
|---|---|
| - 49.5 | g/l of Pb |
| - 138.2 | g/l of free HBF₄. |

In general, it can be observed that according to the invention the use of concentrated sulphuric acid for removing the organic residues and reducing PbO₂ offers, as compared to the other reducing agents as proposed by the prior art for PbO₂ reduction, the following advantages:
- it is the only reactant to be capable of removing the organic substances;
- it does not supply any foreign ions to the solution which has to be fed to the electrolysis, and which must be continuously recycled;
- is a reactant very easily found on the market, at an extremely low cost;
- it can be accurately metered, avoding any wastes, because the end of the reduction of PbO₂ is signalled by a sharp colour turning of the mass, from brown-red to gray;
- it makes it possible to operate without supplying heat;
- the carbonization of the organic matter and the reduction of PbO₂ can be carried out inside Fe equipment;
- it gives the maximum extraction of Pb as compared to the processes known from the prior art;
- by continuously recycling the residue from the attack, substantially no solid effluents from the productive cycles have to be coped with.

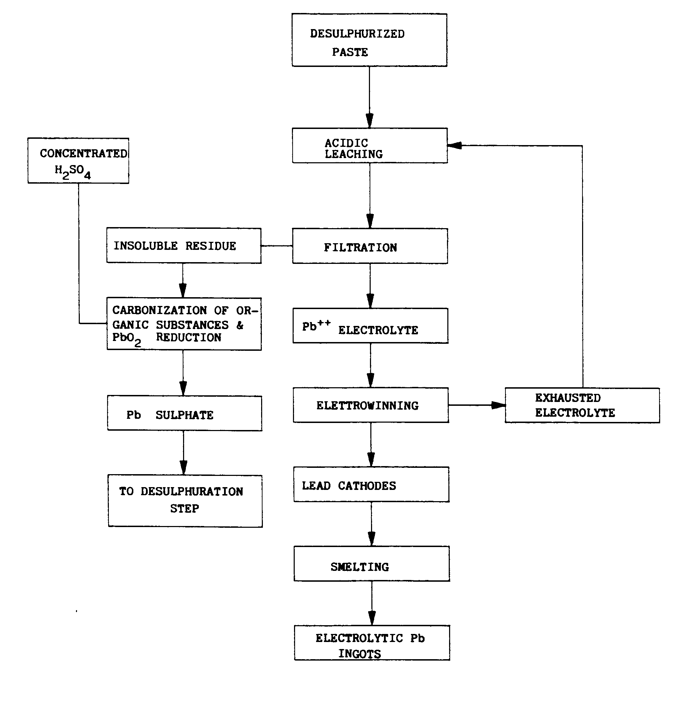

## Claims

1. Hydrometallurgical process of recovering, by extraction by electrolytic way, in pure metal form, all the lead from the active mass, or desulphurized paste, of exhausted batteries, comprising an initial step of leaching of the said active mass with an aqueous solution of an acid selected from the acids suitable for electrowinning, and the subsequent filtration of the insoluble residue of the leaching containing organic substances Cₙ(H₂O)ₘ and lead dioxide PbO₂, and a step of supply of the solution obtained as the filtrate from said filtration, to the electrowinning, characterised in that it comprises the further steps of:
a) treating with concentrated sulphuric acid said insoluble residue of the leaching, with the simultaneous occurring of the following reactions:
1) Cₙ(H₂O)ₘ+ H₂SO₄ nC + H₂SO₄.mH₂O
2) C + 2PbO₂+ 2H₂SO₄ 2PbSO₄+ CO₂+ 2H₂O
up to the quantitative reduction of all of the lead dioxide PbO₂ and elimination of the organic substances Cₙ(H₂O)ₘ contained in said active mass, inasmuch as the organic substance present in said insoluble residue are sufficiently reactive with the concentrated sulphuric acid so that the reaction 1) is completed and their amount is adequate to produce the required C for reducing the whole PbO₂ according to the reaction 2);
b) feeding the so-treated insoluble residue to the desulphurization step.

2. Process according to claim 1, characterised in that said reaction (2) according to (a) is activated by the carbon which is developed in said reaction (1) according to (a).

3. Process according to claim 2, characterised in that the whole of said reactions (1) and (2) takes place in the presence of a moisture of the insoluble residue obtained from the leaching, whereby the moisture level is comprised within the range of form 5 to 15%.

4. Process according to claim 1, characterised in that in said (a) step the used amount of concentrated sulphuric acid is the stoichiometric amount which is necessary to make all the lead react, which is present in said insoluble residue.

5. Process according to claim 1, characterised in that it additionally comprises the following steps of:
c) treating said solution obtained as the filtrate, by extraction by electrolytic way (electrowinning), with cathodes of metal lead being formed;
d) recycling the exhausted electrolyte obtained from said (c) step to said leaching step.

## Patentansprüche

1. Hydrometallurgisches Verfahren zur Rückgewinnung des gesamten Bleis aus der aktiven Masse oder desulfurierten Paste von Altbatterien in reiner Metallform durch Extraktion auf elektrolytischem Wege, umfassend eine Ausgangslaugungsstufe dieser aktiven Masse mit einer wäßrigen Lösung einer unter den für die Elektrogewinnung geeigneten Säuren ausgewählten Säure und das anschließende Abfiltrieren des unlöslichen Rückstandes aus dem Laugungsvorgang, der organische Substanzen Cₙ(H₂O)ₘ und Bleidioxid PbO₂ enthält, und eine Stufe des Einspeisens der als Filtrat aus dem genannten Filtrationsvorgang erhaltenen Lösung in die Elektrogewinnung, dadurch gekennzeichnet, daß es die folgenden Stufen umfaßt:
a) Behandeln des unlöslichen Rückstandes aus dem Laugungsvorgang mit konzentrierter Schwefelsäure, wobei gleichzeitig die folgenden Reaktionen ablaufen:
1) Cₙ(H₂O)ₘ + H₂SO―>nC + H₂SO₄.mH₂O
2) C + 2PbO₂ + 2H₂SO₄―>2bSO₄ + CO₂ + 2H₂O,
bis zur quantitativen Reduktion des gesamten Bleidioxids PbO₂ und Eliminierung der in der aktiven Masse enthaltenen organischen Substanzen Cₙ(H₂O)ₘ , insoweit als die im genannten unlöslichen Rückstand vorliegenden organischen Substanzen mit der konzentrierten Schwefelsäure ausreichend reaktiv sind, sodaß die Reaktion 1) abgeschlossen wird und ihr Ausmaß ausreicht, um den zur Reduktion des gesamten PbO₂ gemäß der Reaktion 2) benötigten Kohlenstoff zu bilden;
b) Einspeisen des solcherart behandelten unlöslichen Rückstandes in die Entschwefelungsstufe.

2. Verfahren nach Anspruch 1, dadurch gekennzeichnet, daß die Reaktion (2) gemäß (a) durch den Kohlenstoff aktiviert wird, der in der Reaktion (1) gemäß (a) gebildet wird.

3. Verfahren nach Anspruch 2, dadurch gekennzeichnet, daß die Gesamtheit der Reaktionen (1) und (2) in Anwesenheit einer Feuchtigkeit des aus dem Laugungsprozeß erhaltenen unlöslichen Rückstandes abläuft, wobei der Feuchtigkeitsgehalt im Bereich von 5 bis 15 % liegt.

4. Verfahren nach Anspruch 1, dadurch gekennzeichnet, daß in der Stufe (a) die eingesetzte Menge an konzentrierter Schwefelsäure die stöchiometrische Menge ist, die erforderlich ist, um das gesamte, im unlöslichen Rückstand vorliegende Blei zum Reagieren zu bringen.

5. Verfahren nach Anspruch 1, dadurch gekennzeichnet, daß es zusätzlich die folgenden Stufen umfaßt:
c) Behandeln der als Filtrat durch die Extraktion erhaltenen Lösung auf elektrolytischem Wege (Elektrogewinnung) unter Ausbildung von Kathoden aus metallischem Blei;
d) Rezyklieren des aus dieser Stufe (c) erhaltenen erschöpften Elektrolyten in die Laugungsstufe.

## Revendications

1. Procédé hydrométallurgique de récupération sous forme de métal pur, par extraction par voie électrolytique, de la totalité du plomb de la masse active, ou de la pâte désulfurée, de batteries épuisées, lequel procédé comporte une étape initiale de lessivage de ladite masse active avec une solution aqueuse d'un acide choisi parmi les acides convenables pour une extraction électrolytique, suivie de la séparation par filtration du résidu insoluble de lessivage, qui contient des substances organiques Cₙ(H₂O)ₘ et du dioxyde de plomb PbO₂, et une étape d'envoi, à l'extraction électrolytique, de la solution obtenue en tant que filtrat dans ladite filtration, ledit procédé étant caractérisé en ce qu'il comporte les étapes supplémentaires suivantes :
a) traitement dudit résidu insoluble de lessivage par de l'acide sulfurique concentré, les réactions suivantes se déroulant simultanément :
1) Cₙ(H₂O)ₘ + H₂SO₄ ----------> nC + H₂SO₄.mH₂O
2) C + 2 PbO₂ + 2 H₂SO₄ ----------> 2 PbSO₄ + CO₂ + 2 H₂O
jusqu'à la réduction quantitative de tout le dioxyde de plomb PbO₂ et l'élimination des substances organiques Cₙ(H₂O)ₘ contenues dans la masse active, dans la mesure où les substances organiques présentes dans le résidu insoluble sont suffisamment réactives avec l'acide sulfurique concentré pour que la réaction (1) s'achève et où leur quantité est suffisante pour produire le C nécessaire pour la réduction de tout le PbO₂ selon la réaction (2);
b) envoi du résidu insoluble ainsi traité vers l'étape de désulfuration.

2. Procédé selon la revendication 1, caractérisé en ce que la réaction (2) indiquée en (a) est activée par le carbone formé au cours de la réaction (1) indiquée en (a).

3. Procédé selon la revendication 2, caractérisé en ce que l'ensemble des réactions (1) et (2) se déroule en présence du résidu insoluble humide obtenu lors du lessivage, le taux d'humidité se situant dans l'intervalle allant de 5 % à 15 %.

4. Procédé selon la revendication 1, caractérisé en ce que, dans l'étape (a), la quantité d'acide sulfurique concentré employée est la quantité stoechiométrique nécessaire pour faire réagir tout le plomb présent dans le résidu insoluble.

5. Procédé selon la revendication 1, caractérisé en ce qu'il comporte en outre les étapes suivantes :
c) traitement d'extraction par voie électrolytique (extraction électrolytique) de la solution obtenue en tant que filtrat, avec des cathodes constituées par le plomb formé ;
d) recyclage de l'électrolyte épuisé, obtenu dans l'étape (C), vers l'étape de lessivage.
